# EUROPEAN PATENT APPLICATION

(11) **EP 2 562 611 A2**
(43) Date of publication of application: **27.02.2013**
(21) Application number: 12180004.9
(22) Date of filing: 10.08.2012
(51) Int. Cl.: G05B 17/02, G05B 23/02

(54) **Process for adaptive modeling of performance degradation**

(30) Priority: 23.08.2011 US 201113215294
(71) Applicant: General Electric Company, Schenectady, NY 12345 (US)
(72) Inventor: Rohm, Tapie, Greenville, SC 29615 (US); Morgan, Rex Allen, Greenville, SC 292615 (US); Watts, Stephen R., Greenville, SC 29615 (US)
(74) Representative: Cleary, Fidelma

(57) **Abstract**

The present subject matter is directed to methods and systems for providing adaptive modeling of performance degradation in a system (100), particularly, a gas turbine system. A performance model is provided and operated as both a calibration model (112) and a baseline model (114). Data produced during both operations is stored (116) and differences there between is used in adaptive logic (120), which may correspond to a neural network, to predict performance degradation to control operation of a system baseline model. Data from operation of the system baseline model may also be stored and used with data from the calibration model and baseline model in the adaptive logic.

## Description

### FIELD OF THE INVENTION

The present subject matter relates to prediction of system performance degradation. More particularly, the present subject matter relates to methodologies for providing improved prediction of gas turbine performance degradation over time.

### BACKGROUND OF THE INVENTION

Gas turbines, as just about everything else, eventually degrade over time as they are used. A common practice for predicting such degradation is to use collected field sensor data to create a regression model. A problem arises using that approach, however, in that, over time, such degradation can vary in response to varying conditions in a variety of ways, such as: changes to configuration over time, time since last water wash, and changes to the inlet and exhaust conditions. As the gas turbine changes, regression models used to predict degradation would require updating as well.

Prior attempts to address this problem have involved approaches such as using regression modeling for different components for specific frames. These regression models were then put into physics based models to determine the component modifiers that are dependent on the number of hours the turbines have been fired. The prior art has addresses some of these concerns in the following documents: US Patent No. 5,080,496, directed to method and apparatus for compensated temperature prediction uses sensors and signal processing for providing a corrected temperature signal indicative of an actual temperature to be measured, US Patent No. 6,522,990 directed to methods and apparatus for reducing temperature overshoot discloses a method for developing a bias between measured temperature and a correlated immeasurable temperature, US Published Patent Application No. 2006/0217870 A1 directed to estimating health parameters or symptoms of a degrading system and focusing on degradation of gas path analysis by deviations of state parameters, US Patent No. 7,058,556 B2, disclosing an Adaptive Aero-thermodynamic engine model that employs an adaptive logic module to modify component efficiencies directly, and US Published Patent Application No. 2008/0120074 A1 disclosing reducing gas turbine performance tracking estimation non-repeatability.

In view of these known issues, it would be advantageous, therefore, to provide methodology and apparatus for monitoring performance degradation over time of systems, in particular gas turbine systems. It would be further advantages to provide a methodology wherein a neural network may be provided as part of a performance prediction tool such that it would allow for self adaptation without code changes while reducing the dependency on configuration and other typical parameters.

### BRIEF DESCRIPTION OF THE INVENTION

Aspects and advantages of the invention will be set forth in part in the following description, or may be obvious from the description, or may be learned through practice of the invention.

The present subject matter relates to a computer-implemented method for providing adaptive modeling of performance degradation in a system. The method provides for simulating a system in a performance model and operating the performance model as a calibration model and as a baseline model. Data produced from operation as both the calibration and baseline models is then stored in a performance data store. The method then predicts performance degradation based on differences between the stored performance data. The method also provides a system baseline model that is operated based on differences between current system conditions and the predicted performance degradation.

In selected embodiments, the method is applied to a gas turbine system. In certain embodiments the performance model is operated as a calibration model using system site and sensor data while in other embodiments the performance model is operated as a baseline model using calibrated data. In still further embodiments, the method provides for operating the system baseline model based on system site and load conditions and storing performance data produced from such operation in the performance data store where predicting performance degradation is then based on differences among the stored performance data from the calibration model, the baseline model, and the system baseline model. In particular embodiments, the method predicts performance degradation using adaptive logic that in selected embodiments may correspond to a neural network.

The present subject matter also relates to a control system for adjusting modeling of performance degradation in a system. In such systems, a system physics based performance model is provided and configured for operation as a calibration model and a baseline model. The system is configured to store performance data produced from operation of the system performance model as both the calibration and baseline models and adaptive logic is provide in a configuration to predict performance degradation based on differences between the stored performance data. The system also provides a system baseline model based that is configured to be operated based on differences between current system conditions and the predicted performance degradation. In certain embodiments, the performance model is configured to operate as a calibration model by operating the performance model using system site and sensor data and, in some embodiments to operate as a baseline model by operating the performance model using calibrated data.

In particular embodiments, the system baseline model is further configured to operate based on system site and load conditions and to store performance data produced from operating the system baseline model in the performance data store so that the adaptive logic predicts performance degradation based also on data from the system baseline model. In selected systems, the adaptive logic may correspond to a neural network. In most particular systems, the system may be a gas turbine and current system conditions may correspond to turbine load conditions.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
Figure 1 provides a process diagram in accordance with present technology; and
Figure 2 illustrates exemplary neural network configuration in accordance with present technology usable with the process illustrated in Figure 1.

Repeat use of reference characters throughout the present specification and appended drawings is intended to represent same or analogous features or elements of the invention.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

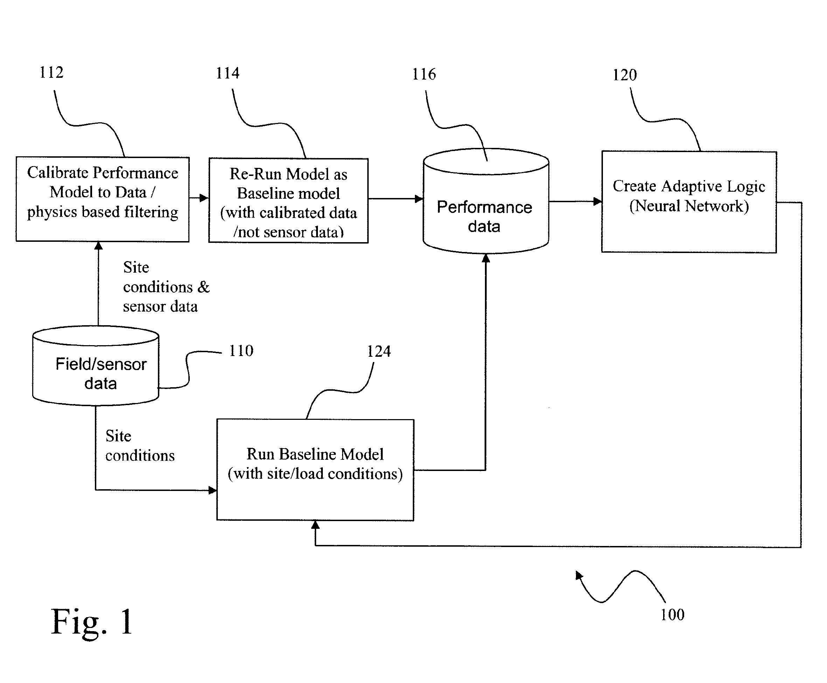

In accordance with present technology, methodologies and apparatus are provided to accurately predict gas turbine performance degeneration over time. With reference to Figure 1, a process diagram 100 is illustrated showing implementation of an adaptive neural logic network in accordance with present technology.

Major processes relating to gas turbine operation include data storage of gas turbine sensor/field data, and processes for running calibration on key cycle parameters on this dataset to create a stable physics based performance solution. Generally, in accordance with present technology, comparison of a calibrated model with a mean performance model that is run through a neural network is used to create an adaptive logic for predicting degradation. Degradation is modeled by using data match deviations that are tuned to given models and modified by a neural network based on dynamic conditions. Adaptive logic is then applied in the mean performance modeling for future prediction use.

In accordance with the present methodology, sensor data is stored for each machine for which performance is to be modeled in database 110. This data, per time iteration, is then passed to two different performance models. First the site conditions and sensor data including, but not limited to, ambient conditions, basic plant and gas turbine configuration, inlet guide vane (IGV) position settings, speed, exhaust temperature, fuel type, and inlet/exhaust pressure, are passed to a performance model to be run as a calibration model 112. Calibration model 112 is then run in a data reduction mode to back calculate performance data. Calibration model 112 may provide some filtering including, without limitation, heat balances, predicted power-measured power, and missing sensor data. In addition, running in this mode allows the process to back calculate some key parameters such as fuel flow where the sensor data may not be reliable.

After running the performance model as a calibration model 112, design multipliers and site condition inputs are applied to the performance model and the performance model is re-run as a baseline model 114 that has been tuned, at least partially, to the site condition. It will be appreciated that baseline model 114 may not have access to all the sensor data as inputs. By running the model in this manner, however, direct comparison may be made between a second performance model run as baseline model 124 with baseline model 114, as both baseline performance models 114, 124 correspond to similar physics based baseline models but with different tuning.

After the performance (baseline) model is run as baseline model 114, data produced there from is stored in performance database 116. Before performance database 116 is used, a second performance (baseline) model 124 is run which has site specific conditions including, but not limited to, load conditions as input but based on a mean line performance model. This model is run such that the same output parameters as run in model 114 are stored in database 116. With the values in database 116 for each time point, a neural network 120 may then be run and trained.

Important inputs to this system include site conditions and outputs of models 114 and 124, as well as the differences (deltas) between theses outputs. The outputs correspond to component specific parameters, including, without limitation, compressor, turbine, combustor, and exhaust data. From this neural network degradation scalars may be calculated and updated based on the data that are then fed back into the baseline model 124. By using a neural network that is based on matrices algorithms and data, this model can then be inputted into the baseline model as part of the degradation model.

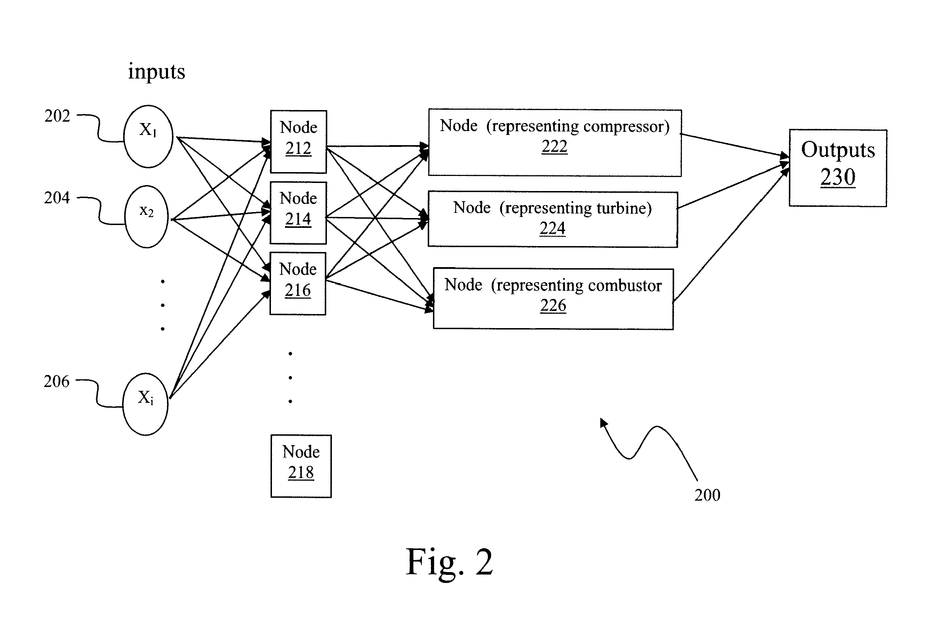

With reference to Figure 2, is will be seen that neural network 200 is configured as a back propagation multilayer neural network. At a first layer, various inputs x₁, x₂, ... xᵢ, corresponding to inputs 202, 204, 206 are coupled to nodes 212, 214, 216, 218. The second layer represents compressor node 222, turbine node 224, and combustor node 226 to which the input nodes 212, 214, 216, 218 are variously coupled while the first layer including nodes 212, 214, 216, 218 handle non-linear interaction aspects.

The present subject matter provides solutions to particular problems specific to modeling degradation in a performance modeling of a gas turbine. It should be appreciated, however, that the present technology can be applied to a wide variety of systems and thus is not limited only to a gas turbine environment. The advantages provided by use of the present technology flow from the fact that the adaptive logic of the neural network 200 allows for a more robust way of learning modifiers for component degradation. Since neural network 200 is self learning, it can be continually improved without code changes or modifications to the existing code base. In addition, since the present technology provides for modifying degradation scalars on selected cycle parameters rather than component efficiency modifiers directly, it allows for continual physics based improvements to which the adaptive logic is able to adjust without software changes.

Those of ordinary skill in the art will appreciate that the present subject matter may be embodied as a software object run on a microprocessor that includes neural network matrices of equations that may be embedded or linked into existing performance models. When so implemented, the software object configures the microprocessor to create specific logic circuits. The technical effect of the software object is to facilitate prediction and optimization of modeled devices and systems.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A computer-implemented method for adaptive modeling of performance degradation in a system, comprising:
simulating a system in a performance model (112, 114);
operating the performance model as a calibration model (112);
operating the performance model as a baseline model (114);
storing performance data (116) produced from operation as both the calibration and baseline models in a performance data store;
predicting performance degradation (120) based on differences between the stored performance data; and
operating a system baseline model (124) based on differences between current system conditions and the predicted performance degradation.

2. The method of claim 1, wherein the system is a gas turbine.

3. The method of claim 1 or 2, wherein operating the performance model as a calibration model comprises operating the performance model using system site and sensor data.

4. The method of any of claims 1 to 3, wherein operating the performance model as a baseline model comprises operating the performance model using calibrated data.

5. The method of any of claims 1 to 4, further comprising operating the system baseline model based on system site and load conditions.

6. The method of any of claims 1 to 5, further comprising:
storing performance data produced from operating the system baseline model in the performance data store; and
predicting performance degradation based on differences among the stored performance data from the calibration model, the baseline model, and the system baseline model.

7. The method of any preceding claim, wherein predicting performance degradation comprises predicting performance degradation using adaptive logic.

8. The method of claim 7, wherein the adaptive logic is a neural network.

9. A control system for adjusting modeling of performance degradation in a system, comprising:
a system performance model configured for operation as a calibration model (112) and a baseline model (114);
a performance data store (116) configured to store performance data produced from operation of the system performance model as both the calibration and baseline models;
adaptive logic (120) configured to predict performance degradation based on differences between the stored performance data; and
a system baseline model based (124),
wherein the system baseline model is configured to be operated based on differences between current system conditions and the predicted performance degradation.

10. The system of claim 9, wherein the performance model is configured to operate as a calibration model by operating the performance model using system site and sensor data.

11. The system of claim 9 or 10, wherein the performance model is configured to operate as a baseline model by operating the performance model using calibrated data.

12. The system of any of claims 9 to 11, wherein the system baseline model is further configured to operate based on system site and load conditions and to store performance data produced from operating the system baseline model in the performance data store; and
wherein the adaptive logic is further configured to predict performance degradation based on data from the system baseline model.

13. The system of any of claims 9 to 12, wherein the adaptive logic is a neural network.

14. The system of any of claims 9 to 13, wherein the system is a gas turbine.

15. The system of claim 14, wherein current system conditions correspond to turbine load conditions.
